# EUROPEAN PATENT SPECIFICATION

(11) **EP 2 914 770 B1**
(45) Date of publication and mention of the grant of the patent: **07.12.2016**
(21) Application number: 12780736.0
(22) Date of filing: 31.10.2012
(51) Int. Cl.: D06N 1/00, B32B 5/26, B32B 7/12, B32B 27/12

(54) **LINOLEUM-BASED SURFACE COVERING ELEMENT**
AUF LINOLEUM BASIERENDES OBERFLÄCHENBELAGELEMENT
ÉLÉMENT DE RECOUVREMENT DE SURFACE À BASE DE LINOLÉUM

(43) Date of publication of application: 09.09.2015
(73) Proprietor: Tarkett GDL, 9779 Lentzweiler (LU)
(72) Inventor: LEONARDI, Ylenia, L-9559 Wiltz (LU); BARTOLETTI, Antonella, L-Wiltz 9559 (LU)
(74) Representative: Pronovem
(86) International application number: PCT/EP2012/071575
(87) International publication number: WO 2014/067570

(56) References cited:
- EP-A1- 1 176 246
- WO-A1-2010/139510
- WO-A2-01/44562
- WO-A2-02/081812
- DE-A1- 10 130 217
- DATABASE WPI Week 200418 Thomson Scientific, London, GB; AN 2004-183128 XP002699599, & JP 2003 027715 A (SUKISSU JAPON KK) 29 January 2003 (2003-01-29)

## Description

### Field of the invention

The present invention relates to a linoleum-based surface covering element in the form of a tile and to a method for producing such an element.

### Prior art and related technical background

Surface coverings are widely used to decorate buildings or houses surfaces, among them, linoleum surface coverings are well known. Generally, they comprise a backing layer made of jute on which a linoleum paste is calendered.

Usually, the linoleum paste comprises ground cork and/or wood flour and possibly mineral fillers and/or pigments together with a linoleum cement comprising a vegetable oil, generally oxidised linseed oil, and rosin.

However, linoleum surface coverings present the drawback of having poor acoustic properties.

To address this issue, it is possible to lay, in site, i.e. where the surface covering has to be laid, over the surface to cover, a underlayment to improve the acoustic properties of the linoleum surface covering installed over this underlay.

However, the underlayment, just like the linoleum surface coverings, are generally in the form of rolls having a wide width and length, generally 2 m width and 30 to 35 m length.

WO 2010/139510 describes a layered structure, such as a floor covering, reversibly attachable to a magnetically attractable support. The structure comprises a textile backing layer, preferably made of natural jute, and a linoleum based layer comprising magnetic material. Optionally, the layered structure further comprises a resilient and/or an acoustic layer and a wear layer. In the layered structure, the different layers are affixed to each other by gluing, using an appropriate adhesive such as polyurethane adhesives, vinyl adhesives or other types. In a preferred embodiment, the adhesive is a thermo-bonding film (hot melt film), which is applied in a rotary press (AUMA).

JP2003-027715 describes a compound flooring comprising a rubber cork sheet and a linoleum block that are laminated together using an epoxy resin, a hot melt film or heat crimping.

### Aims of the invention

The present invention aims to provide a linoleum-based surface covering element in the form of a tile and a method for producing such an element that do not have the drawbacks of the prior art.

The present invention aims to provide a linoleum-based surface covering element easy to install on site.

The present invention aims to provide a method for producing such an element easy to implement in a production facility.

### Summary of the invention

The present invention relates to a linoleum-based surface covering element in the form of a tile comprising a support layer comprising a cork-based layer and a fabric layer, a wear layer comprising a linoleum-based layer and a fabric layer, and an adhesive layer joining the fabric layer of the support layer and the fabric layer of the wear layer.

According to particular embodiments, the linoleum-based surface covering element may comprise one, or a combination, of any of the following characteristics:
- the cork-based layer of the support layer has a composition comprising, based on the total weight of the cork-based composition, 25 to 50% wt of a cement, 20 to 55% wt of ground cork and 0 to 20% wt of wood, 0 to 12% wt of at least one pigment and the quantity sufficient to reach 100% wt of at least one inorganic filler,
- the linoleum-based layer of the wear layer has a composition comprising, based on the total weight of the linoleum-based composition, 35 to 60% wt of a cement, 20 to 40% wt of ground cork, 0 to 11% wt of at least one pigment and the quantity sufficient to reach 100% wt of at least one inorganic filler,
- the cork-based layer of the support layer has a composition comprising a percentage in weight of ground cork higher than the percentage in weight of the ground cork of the composition of the linoleum-based layer of the wear layer,
- the adhesive layer is a pressure-sensitive adhesive,
- the linoleum-based surface covering element further comprises a top coating layer over the linoleum-based layer of the wear layer and/or a supplementary adhesive layer under the cork-based layer of the support layer,
- the supplementary adhesive layer is a pressure-sensitive adhesive protected by a liner.

The invention relates also to a method for producing a linoleum-based surface covering element according to the invention, said method comprising the steps of producing and providing a support layer comprising a cork-based layer and a fabric layer, producing and providing a wear layer comprising a linoleum-based layer and fabric layer, joining said fabric layer of said support layer to said fabric layer of said wear layer by means of an adhesive layer to obtain an linoleum-based intermediate, cutting said linoleum-based intermediate into tiles.

According to particular embodiments, the method according to the invention may comprise one, or a combination, of any of the following characteristics:
- the support layer and the wear layer are produced simultaneously,
- the support layer and the wear layer are produced successively,
- the wear layer further comprises a top coating layer over the linoleum-based layer,
- the support layer comprises a supplementary adhesive layer under the cork-based layer,
- the method further comprises the step of applying a supplementary adhesive layer under the cork-based layer of the support layer,
- the wear layer is produced by providing several linoleum-based compositions, producing several linoleum-based pastes of different colours, producing linoleum-based crumbles from the linoleum pastes of different colours, mixing the linoleum-based crumbles, calendering the linoleum-based crumbles on the jute layer of the wear layer and curing by heat the linoleum-based crumbles over the jute layer.

### Short description of the drawings

Figure 1 represents schematically the linoleum surface covering according to the invention.
Figure 2 represents schematically the linoleum surface covering according to a second embodiment of the invention.
Figure 3 represents schematically the linoleum surface covering according to a third embodiment of the invention.
Figure 4 is a flow chart diagram of a preferred embodiment of the method to produce the linoleum surface covering according to the present invention.
Figure 5 represents schematically the step of applying of the adhesive liner on the jute layer of the wear layer in a preferred embodiment of the method according to the invention.
Figure 6 represents schematically another preferred embodiment of the process of the invention.

### Detailed description of the invention

The linoleum-based surface covering element 1 according to the present invention is a tile, not a roll, having any suitable shape and having preferably a width comprised between 300 and 650 mm and a length comprised between 300 and 900 mm. Preferably the width is 400 mm and the length is 600 mm.

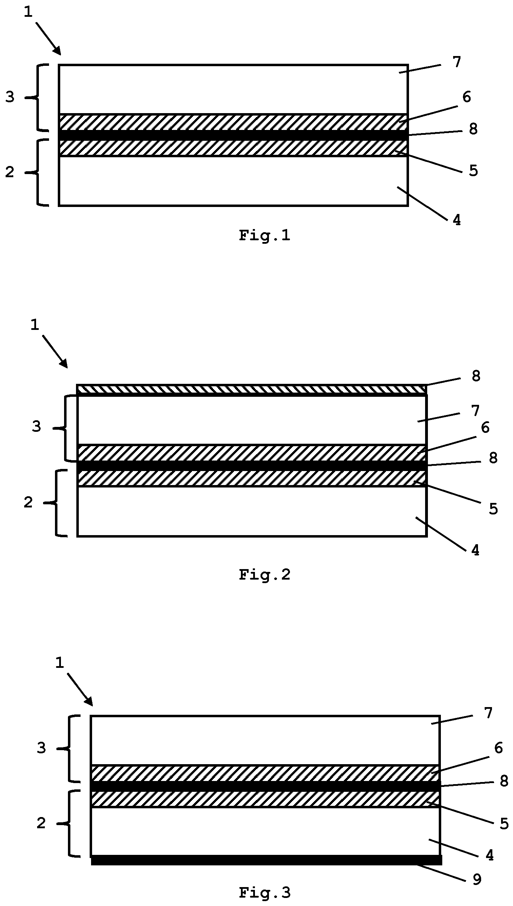

The linoleum-based surface covering element 1 comprises a support layer 2 and a wear layer 3 (figure 1).

The support layer 2 comprises a cork-based layer 4 and a fabric layer 5.

The cork-based layer 4 has preferably a cork-based composition comprising, based on the total weight of the cork-based composition, 25 to 50 % wt of a cement and 20 to 55% wt of ground cork. Preferably, the ground cork particles have a size comprised between 300 µm and 1000 µm.

Preferably, the cork-based composition may further comprise up to 20% wt of wood particles and/or up to 12% wt of at least one pigment and at least one inorganic filler in a quantity sufficient to reach 100% wt.

Preferably, the cement of the cork-based composition comprises, based on the total weight of the cement composition, 70 to 85 % wt of oxidized linseed oil, 8 to 20% wt of natural rosin and at least one inorganic filler in a quantity sufficient to reach 100% wt.

The at least one pigment is preferably an organic pigment. For example, it is TiO₂ or an iron oxide.

The cork-based composition of the cork-based layer 4 may comprise a plurality of pigments.

The at least one filler is preferably CaCO₃, kaolin, aluminium hydroxide, magnesium hydroxide, perlite or a combination thereof.

The wear layer 3 comprises a linoleum-based layer 7 and a fabric layer 6. The linoleum-based layer 7 is made from a linoleum-based composition comprising, based on the total weight of the linoleum-based composition, a cement representing between 35 to 60%wt and 20 to 40% wt of ground cork. Preferably, the ground cork particles have a size up to 300µm.

Preferably, in the linoleum-based composition of the linoleum-based layer 7, the percentage of ground cork is smaller than the percentage of ground cork in the cork-based composition of the cork-based layer 4 of the support layer 2.

Preferably, the cement of the linoleum-based composition comprises, based on the total weight of the cement composition, 70 to 85 % wt of oxidized linseed oil, 8 to 20% wt of natural rosin and at least one organic filler.

Preferably, the linoleum-based composition may further comprise at least one, more preferably a plurality of pigments and/or at least one, more preferably a plurality of fillers.

Preferably, the at least one pigment is an organic pigment, for example TiO₂ or an iron oxide.

Preferably, the at least one filler is CaCO₃, kaolin, aluminium hydroxide, magnesium hydroxide, perlite or a combination thereof.

The fabric layers 5 and 6 are any suitable layer made of jute or polyester.

The linoleum-based surface covering element 1 further comprises an adhesive layer 8 between the fabric layer 5 of the support layer 2 and the fabric layer 6 of the wear layer 7.

Preferably, the adhesive is a pressure-sensitive adhesive, more preferably the adhesive is one of the transfer tape adhesives. It is for example a solvent based or water based acrylic adhesive.

Preferably, the linoleum-based surface covering element 1 further comprise a top coating layer 8 over the linoleum-based layer 7 of the wear layer 3 and/or a supplementary adhesive layer 9 under the cork-based layer 4 of the support layer 2 (figures 2 and 3).

Preferably, the top coating layer is made of reinforced urethane and or acrylic formulations.

Preferably, for a ready-to-install tile, the supplementary adhesive layer 9 is a pressure-sensitive adhesive, more preferably the adhesive is one of the transfer tapes adhesives.

Preferably, the support layer 2 has a thickness comprised between 1 mm and 4 mm and the wear layer 3 between 1.30 mm to 4 mm.

Preferably, the fabric layers 5 and 6 have each a thickness of between 0.55 and 0.7 mm and a weight of between 230 and 275 g/m² in the case of a jute fabric, and between 0.15 and 0.30 mm and a weight of between 90 and 110 g/m² in the case of a polyester fabric.

An example of linoleum-based surface covering element 1 according is a tile of 400 mm width and 600 mm length and having an overall thickness of 80 mm. The cork-based layer 4 of the support layer 2 comprises 41% wt of ground cork, 39% wt of cement, 9% wt of CaCO₃ and 11% wt of TiO₂. The linoleum-based layer 7 of the wear layer 3 comprises 20% wt of ground cork, 50% wt of cement, 29% wt of CaCO₃ and 11% wt of TiO₂.

The linoleum-based surface covering element 1 according to the invention presents good acoustic properties according to an acoustic performance test according to NF EN ISO 140-8: 1997 and NF EN ISO 717-2: 1997.

It appears that, compared to a standard linoleum tile (4 mm linoleum layer and 0.6 mm jute layer) having an acoustical efficiency of 6 dB and to a standard linoleum tile provided with an underlayer of ground cork (40mm) having an acoustical efficiency of 14 dB, the tile according to the invention has an acoustical efficiency of 14dB.

Furthermore, the linoleum-based surface covering element 1 according to the invention has a good dimensional stability in a test according to EN 669 (table 1).

**Table 1: dimensional stability.**

| **Test no.** | **Tiles** | **Lenght variation [%]** | **Width variation [%]** |
|---|---|---|---|
| 1 | Prior art tiles | 0.02 | 0.06 |
| | According to the invention | 0 | 0.06 |
| 2 | According to the invention | 0.01 | 0.05 |

The linoleum-based surface covering element 1 according to the invention is in compliance with requirements of EN 548, stating that the dimensional variations caused by changes of atmospheric humidity must be lower or equal to 0.1%.

Thus, the linoleum-based surface covering element 1 will remain stable during its whole life.

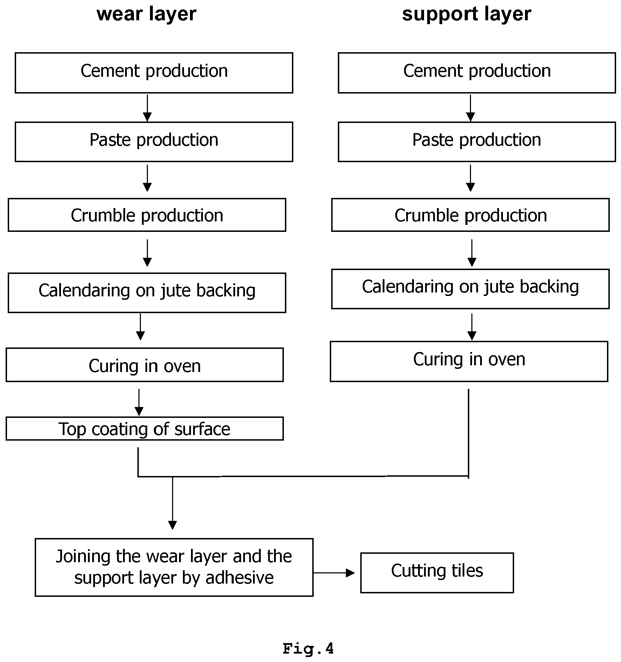

The method to produce the linoleum-based surface covering element according to the present invention (figure 4) is a method to be implemented in a surface covering production facility.

The method comprises the steps of producing and providing a support layer 2 comprising a cork-based layer 4 and a fabric layer 5, producing and providing wear layer 3 comprising a linoleum-based layer 7 and fabric layer 6, joining said fabric layer 5 of said support layer 2 to said fabric layer 6 of said wear layer 3 by means of an adhesive layer 8 to obtain an linoleum-based intermediate, cutting said linoleum-based intermediate into tiles.

The support layer 2 is produced by providing a cork-based composition, producing crumbles from said cork-based composition, calendering said crumbles on a fabric layer 5 and curing by heat said cork-based crumbles over said fabric layer 5.

The support wear layer 3 is produced by providing a linoleum-based composition, producing crumbles from said linoleum-based composition, calendering said crumbles on a fabric layer 6 and curing by heat said linoleum-based crumbles over said fabric layer 6.

Preferably, the support layer 2 and wear layer 3 are produced simultaneously on separate production lines.

In another preferred embodiment, the support layer 2 is produced prior to the production of the wear layer 3.

Preferably, the crumbles of the wear layer 3 are produced from linoleum-based pastes of different colours and mixed before being calendered to the jute layer 7.

Preferably, the temperature of calendering the linoleum-based crumbles and the cork-based crumbles over the corresponding jute layers is performed at a temperature comprised between 20 and 130°C.

Preferably, the linoleum-based and cork-based crumbles are cured at a temperature comprised between 70 and 100°C, using any suitable device, for example an oven.

In a preferred embodiment, the adhesive layer is applied by any suitable mean, for example by coating, on the fabric layer 5 of the support layer 2, or the fabric layer 6 of the wear layer 3, or both, and the fabric layers 5 and 6 are joined right after.

In another embodiment, the joining the fabric layer 5 of the support layer 2 to the fabric layer 6 of the wear layer 3 is made using a transfer tape.

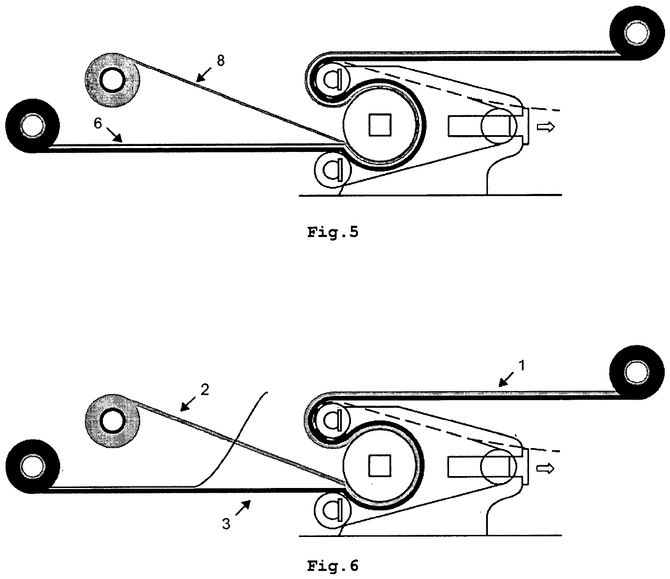

Preferably an adhesive layer protected by a liner is applied on the fabric layer 5 of the support layer 2 (figures 5) or on the fabric layer 6 of the wear layer 3, by mean, for example, of a rotary press, with a contact pressure between cylinder and the steel tape in the range of 50 to 150 bars, a line speed in the range of 5 to 15 m/min and cylinder at room temperature. Then the liner is progressively removed (figure 6) while the support layer 2 and the wear layer 3 are joined by mean, for example, of the same rotary press, with a contact pressure between cylinder and the steel tape in the range of 50 to 150 bars, a line speed in the range of 5 to 15 m/min and cylinder at room temperature.

The transfer tape embodiment present several advantages. It allows energy saving as it works at room temperature and is a continuous process. It is also environment friend because there are no emissions of vapors or volatile compounds. The cleaning of the line is not required, so there are no chemicals and cleaning wastes to dispose and it is possible to recover the liner used for the transfer for reusing.

Preferably, the cutting step of linoleum-based intermediate into tiles is done by pantograph, die cutting or shear.

The method according to the invention can be implemented on any suitable device, preferably on an AUMA press (i.e. rotary press), with a contact pressure of between 80 and 170 bar between the cylinder and the steel tape and with a temperature of the cylinder of between 130 and 180°C, the line speed being between 3 and 15 m/min.

The method according to the invention further present the advantage of not needing a specific production line for producing the surface covering tiles according to the invention.

Further, the method allows a late differentiation of the linoleum-based. Indeed, the production line may be used to produce a linoleum-based surface covering comprising the wear layer 3 comprising the linoleum-based layer 7 and the fabric layer 6, possibly a top coating over the linoleum-based layer 7, and if needed a transfer tape or release liner adhesive under the fabric layer 6. This linoleum-based surface covering may be used as it is or may be wound and stored in form of a roll and, when needed, it may be unpack and the liner adhesive being added or, if already present, the liner of the adhesive removed, so that the support layer 2 is joined to the wear layer 3. The linoleum-based surface covering thus obtain could be then cut into tiles.

For ready-to-install surface covering tiles, the method according to the invention may further comprises an additional step to make the backing of the tiles self-adhesive. The method may comprise a step of coating the cork-based layer 4 of the support layer 2 by an adhesive composition protected by a paper or a liner. This step may be performed on the cork-based layer 4 of the support layer 2 separately from the production of the linoleum-based surface covering, or either before or after the surface covering being cut in tiles.

The adhesive layer 9 may be a pressure-sensitive adhesive.

## Claims

1. A method for producing a linoleum-based surface covering element (1), said method comprising the steps of:
- providing a support layer (2) comprising a cork-based layer (4) and a fabric layer (5),
- providing wear layer (3) comprising a linoleum-based layer (7) and fabric layer (6),
- joining said fabric layer (5) of said support layer (2) to said fabric layer (6) of said wear layer (3) by means of an adhesive layer (8) to obtain an linoleum-based intermediate, and
- cutting said linoleum-based intermediate into tiles;
**characterized in that** said adhesive layer (8) is a pressure-sensitive adhesive of the transfer tape type applied under pressure.

2. The method according to claim 1, wherein the step of joining said fabric layer (5) of said support layer (2) to said fabric layer (6) of said wear layer (3) comprises:
- applying said transfer tape adhesive protected by a liner onto the fabric layer (5) of the support layer (2) or onto the fabric layer (6) of the wear layer (3); and
- progressively removing the liner from the transfer tape adhesive while the support layer (2) and the wear layer (3) are joined.

3. The method according to claim 2, wherein the transfer type adhesive layer protected by a liner is applied on the fabric layer (5) of the support layer (2) or on the fabric layer (6) of the wear layer (3) by means of a rotary press, with a contact pressure between a cylinder and a steel tape in the range of 50 to 150 bars, a line speed in the range of 5 to 15 m/min and a cylinder at room temperature.

4. The method according to claim 3, wherein the support layer (2) and the wear layer (3) are joined by means of the same rotary press, with a contact pressure between a cylinder and a steel tape in the range of 50 to 150 bars, a line speed in the range of 5 to 15 m/min and a cylinder at room temperature.

5. The method according to any one of the claims 1 to 5, wherein the support layer (2) and the wear layer (3) are produced simultaneously.

6. The method according to any one of the claims 1 to 5, wherein the support layer (2) and the wear layer (3) are produced successively.

7. The method according to any one of the claim 1 to 6, wherein the support layer (2) comprises a supplementary adhesive layer (9) under the cork-based layer (4).

8. The method according to any one of the claims 1 to 7, wherein the method further comprises the step of applying a supplementary adhesive layer (9) under the cork-based layer (4) of the support layer (2).

9. The method according to any one of the claims 1 to 8, wherein the linoleum-based layer (7) of the wear layer (3) is produced by providing several linoleum-based compositions, producing several linoleum-based pastes of different colours, producing linoleum-based crumbles from said linoleum pastes of different colours, mixing said linoleum-based crumbles, calendering said linoleum-based crumbles on the jute layer (6) of the wear layer (3) and curing by heat said linoleum-based crumbles over said jute layer (6).

10. A linoleum-based surface covering element (1) in the form of a tile comprising:
a support layer (2) comprising a cork-based layer (4) and a fabric layer (5),
a wear layer (3) comprising a linoleum-based layer (7) and a fabric layer (6) and
an adhesive layer (8) joining the fabric layer (5) of said support layer (2) and the fabric layer (6) of said wear layer (7);
**characterized in that** said adhesive layer is a pressure-sensitive adhesive of the transfer tape type applied under pressure.

11. The linoleum surface covering element (1) according to claim 10, wherein the cork-based layer (4) of the support layer (2) has a composition comprising, based on the total weight of the cork-based composition, 25 to 50% wt of a cement, 20 to 55% wt of ground cork and 0 to 20% wt of wood, 0 to 12% wt of at least one pigment and the quantity sufficient to reach 100% wt of at least one inorganic filler.

12. The linoleum surface covering element (1) according to claim 10 or 11, wherein the linoleum-based layer (7) of the wear layer (3) has a composition comprising, based on the total weight of the linoleum-based composition, 35 to 60% wt of a cement, 20 to 40% wt of ground cork, 0 to 11% wt of at least one pigment and the quantity sufficient to reach 100% wt of at least one inorganic filler.

13. The linoleum surface covering element (1) according to any one of the claims 10 to 12, wherein the cork-based layer (4) of the support layer (2) has a composition comprising a percentage in weight of ground cork higher than the percentage in weight of the ground cork of the composition of the linoleum-based layer (7) of the wear layer (3)

14. The linoleum surface covering element (1) according to any one of the claims 10 to 13, further comprising a top coating layer (8) over the linoleum-based layer (7) of the wear layer (3) and/or a supplementary adhesive layer (9) under the cork-based layer (4) of the support layer (2).

15. The linoleum surface covering element (1) according to claim 14, wherein the supplementary adhesive layer (9) is a pressure-sensitive adhesive protected by a liner.

## Patentansprüche

1. Verfahren zur Herstellung eines auf Linoleum basierenden Oberflächenbelagelements (1), wobei das Verfahren die folgenden Schritte umfasst:
- Bereitstellen einer Trägerschicht (2), die eine Schicht auf Korkbasis (4) und eine Gewebeschicht (5) umfasst;
- Bereitstellen einer Verschleißschicht (3), umfassend eine auf Linoleum basierende Schicht (7) und eine Gewebeschicht (6);
- Verbinden der Gewebeschicht (5) der Trägerschicht (2) mit der Gewebeschicht (6) der Verschleißschicht (3) mittels einer Haftschicht (8) für den Erhalt eines auf Linoleum basierenden Intermediats, und
- Schneiden des auf Linoleum basierenden Intermediats zu Fliesen;
**dadurch gekennzeichnet, dass** die Haftschicht (8) ein druckempfindlicher Klebstoff des Transferbandtyps ist der unter Druck aufgebracht wird.

2. Verfahren gemäß Anspruch 1, wobei der Schritt des Verbindens der Gewebeschicht (5) der Trägerschicht (2) mit der Gewebeschicht (6) der Verschleißschicht (3) Folgendes umfasst:
- Aufbringen des durch eine Deckschicht geschützten Transferklebebands auf die Gewebeschicht (5) der Trägerschicht (2) oder auf die Gewebeschicht (6) der Verschleißschicht (3); und
- schrittweises Entfernen der Deckschicht von dem Transferklebeband, während die Trägerschicht (2) und die Verschleißschicht (3) verbunden werden.

3. Verfahren gemäß Anspruch 2, wobei die durch eine Deckschicht geschützte Haftschicht vom Transfertyp auf die Gewebeschicht (5) der Trägerschicht (2) oder auf die Gewebeschicht (6) der Verschleißschicht(3) mittels einer Rotationspresse mit einem Kontaktdruck zwischem einem Zylinder bzw. einer Trommel und einem Stahlband im Bereich von 50 bis 150 Bar, einer Anlagengeschwindigkeit im Bereich von 5 bis 15 m/min und einer Trommel bei Raumtemperatur aufgebracht wird.

4. Verfahren gemäß Anspruch 3, wobei die Trägerschicht (2) und die Verschleißschicht (3) mittels der gleichen Rotationspresse mit einem Kontaktdruck zwischem einer Trommel und einem Stahlband im Bereich von 50 bis 150 Bar, einer Anlagengeschwindigkeit im Bereich von 5 bis 15 m/min und einer Trommel bei Raumtemperatur verbunden werden.

5. Verfahren gemäß einem der Ansprüche 1 bis 5, wobei die Trägerschicht (2) und die Verschleißschicht (3) gleichzeitig hergestellt werden.

6. Verfahren gemäß einem der Ansprüche 1 bis 5, wobei die Trägerschicht (2) und die Verschleißschicht (3) aufeinanderfolgend hergestellt werden.

7. Verfahren gemäß einem der Ansprüche 1 bis 6, wobei die Trägerschicht (2) eine zusätzliche Haftschicht (9) unter der auf Kork basierenden Schicht (4) umfasst.

8. Verfahren gemäß einem der Ansprüche 1 bis 7, wobei das Verfahren ferner den Schritt des Aufbringens einer zusätzlichen Haftschicht (9) unter der auf Kork basierenden Schicht (4) der Trägerschicht (2) umfasst.

9. Verfahren gemäß einem der Ansprüche 1 bis 8, wobei die auf Linoleum basierende Schicht (7) der Verschleißschicht (3) durch Bereitstellen von mehreren auf Linoleum basierenden Zusammensetzungen, Erzeugen von mehreren auf Linoleum basierenden Pasten von unterschiedlichen Farben, Erzeugen von auf Linoleum basierenden Streuseln von den Linoleumpasten von unterschiedlichen Farben, Mischen der auf Linoleum basierenden Streusel, Kalandrieren der auf Linoleum basiereden Streusel auf der Juteschicht (6) der Verschleißschicht (3) und Aushärten durch Wärme der auf Linoleum basierenden Streusel über der Juteschicht (6) hergestellt wird.

10. Auf Linoleum basierendes Oberflächenbelagelement (1) in der Form einer Fliese, umfassend:
eine Trägerschicht (2), umfassend eine auf Kork basierende Schicht (4) und eine Gewebeschicht (5);
eine Verschleißschicht (3), umfassend eine auf Linoleum basierende Schicht (7) und eine Gewebeschicht (6) und
eine Haftschicht (8), welche die Gewebeschicht (5) der Trägerschicht (2) und die Gewebeschicht (6) der Verschleißschicht (7) verbindet;
**dadurch gekennzeichnet, dass** die Haftschicht ein druckempfindlicher Klebstoff des Transferband-Typs ist das unter Druck aufgebracht wird.

11. Linoleum-Oberflächenbelagelement (1) gemäß Anspruch 10, wobei die auf Kork basierende Schicht (4) der Trägerschicht (2) eine Zusammensetzung hat, die auf Basis des Gesamtgewichts der auf Kork basierenden Zusammensetzung 25 bis 50 Gew.-% eines Zements, 20 bis 55 Gew.-% zermahlenen Kork und 0 bis 20 Gew.-% Holz, 0 bis 12 Gew.-% von wenigstens einem Pigment und die Menge von wenigstens einem anorganischen Füllstoff, die zum Erreichen von 100 Gew.-% ausreichend ist, umfasst.

12. Linoleum-Oberflächenbelagelement (1) gemäß Anspruch 10 oder 11, wobei die auf Linoleum basierende Schicht (7) der Trägerschicht (3) eine Zusammensetzung hat, die auf Basis des Gesamtgewichts der auf Linoleum basierenden Zusammensetzung 35 bis 60 Gew.-% eines Zements, 20 bis 40 Gew.-% zermahlenen Kork, 0 bis 11 Gew.-% von wenigstens einem Pigment und die Menge von wenigstens einem anorganischen Füllstoff, die zum Erreichen von 100 Gew.-% ausreichend ist, umfasst.

13. Linoleum-Oberflächenbelagelement (1) gemäß einem der Ansprüche 10 bis 12, wobei die auf Kork basierende Schicht (4) der Trägerschicht (2) eine Zusammensetzung hat, die einen Gewichtsprozentanteil an zermahlenem Kork von höher als dem Gewichtsprozentanteil des zermahlenen Korks der Zusammensetzung der auf Linoleum basierenden Schicht (7) der Verschleißschicht (3) hat.

14. Linoleum-Oberflächenbelagelement (1) gemäß einem der Ansprüche 10 bis 13, ferner umfassend eine Überzugsdeckschicht (8) über der auf Linoleum basierenden Schicht (7) der Verschleißschicht (3) und/oder eine ergänzende Haftschicht (9) unter der auf Kork basierenden Schicht (4) der Trägerschicht (2).

15. Linoleum-Oberflächenbelagelement (1) gemäß Anspruch 14, wobei die ergänzende Haftschicht (9) ein durch ein durch eine Deckschicht geschützter druckempfindlicher Klebstoff ist.

## Revendications

1. Procédé de fabrication d'un élément de recouvrement de surface à base de linoléum (1), ledit procédé comprenant les étapes qui consistent à :
- fournir une couche de support (2) comprenant une couche à base de liège (4) et une couche de tissu (5),
- fournir une couche d'usure (3) comprenant une couche à base de linoléum (7) et une couche de tissu (6),
- réunir ladite couche de tissu (5) de ladite couche de support (2) et ladite couche de tissu (6) de ladite couche d'usure (3) au moyen d'une couche d'adhésif (8) pour obtenir un produit intermédiaire à base de linoléum, et
- découper ledit produit intermédiaire à base de linoléum pour produire des dalles ;
**caractérisé en ce que** ladite couche d'adhésif (8) est un adhésif sensible à la pression du type ruban de transfert appliqué sous pression.

2. Procédé selon la revendication 1, dans lequel l'étape qui consiste à réunir ladite couche de tissu (5) de ladite couche de support (2) et ladite couche de tissu (6) de ladite couche d'usure (3) comprend :
- l'application dudit adhésif de type ruban de transfert protégé par une doublure sur la couche de tissu (5) de la couche de support (2) ou sur la couche de tissu (6) de la couche d'usure (3) ; et
- le retrait progressif de la doublure de l'adhésif de type ruban de transfert tandis que la couche de support (2) et la couche d'usure (3) sont réunies.

3. Procédé selon la revendication 2, dans lequel la couche d'adhésif de transfert protégée par une doublure est appliquée sur la couche de tissu (5) de la couche de support (2) ou sur la couche de tissu (6) de la couche d'usure (3) au moyen d'une presse rotative, avec une pression de contact entre un cylindre et une bande en acier de 50 à 150 bars, une vitesse linéaire de 5 à 15 m/min, et un cylindre à la température ambiante.

4. Procédé selon la revendication 3, dans lequel la couche de support (2) et la couche d'usure (3) sont réunies au moyen de la même presse rotative, avec une pression de contact entre un cylindre et une bande en acier de 50 à 150 bars, une vitesse linéaire de 5 à 15 m/min, et un cylindre à la température ambiante.

5. Procédé selon l'une quelconque des revendications 1 à 5, dans lequel la couche de support (2) et la couche d'usure (3) sont produites simultanément.

6. Procédé selon l'une quelconque des revendications 1 à 5, dans lequel la couche de support (2) et la couche d'usure (3) sont produites successivement.

7. Procédé selon l'une quelconque des revendications 1 à 6, dans lequel la couche de support (2) comprend une couche d'adhésif supplémentaire (9) sous la couche à base de liège (4).

8. Procédé selon l'une quelconque des revendications 1 à 7, le procédé comprenant en outre l'étape qui consiste à appliquer une couche d'adhésif supplémentaire (9) sous la couche à base de liège (4) de la couche de support (2).

9. Procédé selon l'une quelconque des revendications 1 à 8, dans lequel la couche à base de linoléum (7) de la couche d'usure (3) est produite en fournissant plusieurs compositions à base de linoléum, en produisant plusieurs pâtes à base de linoléum de différentes couleurs, en produisant des granulés à base de linoléum à partir desdites pâtes de linoléum de différentes couleurs, en mélangeant lesdits granulés à base de linoléum, en calandrant lesdits granulés à base de linoléum sur la couche de jute (6) de la couche d'usure (3), et en durcissant par la chaleur lesdits granulés à base de linoléum sur ladite couche de jute (6).

10. Élément de recouvrement de surface à base de linoléum (1) sous la forme d'une dalle comprenant :
une couche de support (2) comprenant une couche à base de liège (4) et une couche de tissu (5),
une couche d'usure (3) comprenant une couche à base de linoléum (7) et une couche de tissu (6), et
une couche d'adhésif (8) réunissant la couche de tissu (5) de ladite couche de support (2) et la couche de tissu (6) de ladite couche d'usure (7) ;
**caractérisé en ce que** ladite couche d'adhésif est un adhésif sensible à la pression du type ruban de transfert appliqué sous pression.

11. Élément de recouvrement de surface à base de linoléum (1) selon la revendication 10, dans lequel la couche à base de liège (4) de la couche de support (2) a une composition comprenant, relativement au poids total de la composition à base de liège, 25 à 50 % en poids d'un ciment, 20 à 55 % en poids de liège moulu, et 0 à 20 % en poids de bois, 0 à 12 % en poids d'au moins un pigment, et une quantité suffisante d'au moins une charge inorganique pour atteindre 100 % en poids.

12. Élément de recouvrement de surface à base de linoléum (1) selon la revendication 10 ou 11, dans lequel la couche à base de linoléum (7) de la couche d'usure (3) a une composition comprenant, relativement au poids total de la composition à base de linoléum, 35 à 60 % en poids d'un ciment, 20 à 40 % en poids de liège moulu, 0 à 11 % en poids d'au moins un pigment, et une quantité suffisante d'au moins une charge inorganique pour atteindre 100 % en poids.

13. Élément de recouvrement de surface à base de linoléum (1) selon l'une quelconque des revendications 10 à 12, dans lequel la couche à base de liège (4) de la couche de support (2) a une composition comprenant un pourcentage pondéral de liège moulu supérieur au pourcentage pondéral de liège moulu de la composition de la couche à base de linoléum (7) de la couche d'usure (3).

14. Élément de recouvrement de surface à base de linoléum (1) selon l'une quelconque des revendications 10 à 13, comprenant en outre une couche de revêtement supérieure (8) par dessus la couche à base de linoléum (7) de la couche d'usure (3) et/ou une couche d'adhésif supplémentaire (9) sous la couche à base de liège (4) de la couche de support (2).

15. Élément de recouvrement de surface à base de linoléum (1) selon la revendication 14, dans lequel la couche d'adhésif supplémentaire (9) est un adhésif sensible à la pression protégé par une doublure.
